# EUROPEAN PATENT SPECIFICATION

(11) **EP 2 338 745 B1**
(45) Date of publication and mention of the grant of the patent: **24.04.2013**
(21) Application number: 09180308.0
(22) Date of filing: 22.12.2009
(51) Int. Cl.: B60R 21/34

(54) **A Retraction Arrangement**
Rückzuganordnung
Agencement de rétraction

(43) Date of publication of application: 29.06.2011
(73) Proprietor: Autoliv Development AB, 447 83 Vårgårda (SE)
(72) Inventor: Rydsmo, Erik, 466 95, Sollebrunn (SE); Magnusson, Ulf, 44157, Alingsas (SE)
(74) Representative: Beattie, Alex Thomas Stewart

(56) References cited:
- WO-A1-2005/023605
- JP-A- 2006 219 046

## Description

### Description of Invention

THIS INVENTION relates to a retraction arrangement, and in particular concerns an arrangement for retracting an air-bag cushion after inflation.

When a motor vehicle is involved in a head-on collision with a pedestrian, it is common for the body of the pedestrian to strike the windscreen of the vehicle. This can result in serious injury to the pedestrian, and significant damage to the vehicle.

In an attempt to alleviate this, it has been proposed to provide a pedestrian air-bag which, if vehicle sensors indicate that an appropriate collision is occurring or is likely to occur, inflates to cover a central portion of the windscreen, and/or the left and right A-pillars of the vehicle. Typically, the air-bag is stored beneath a rear edge of the vehicle's bonnet, or beneath a cowl which is provided between the base of the windscreen and the rear of the bonnet. The rear of the bonnet may be lifted, by a suitable air-bag, piston or other arrangement, to allow sufficient space for the air-bag to inflate.

The aim of a pedestrian air-bag of this type is to provide an inflated cushion over the windscreen and/or A-pillars of the vehicle, thus cushioning the impact of a pedestrian with these parts of the vehicle.

One potential problem that can occur with the use of air-bags of this type is that, once the air-bag has been inflated, it is very difficult for the driver of the vehicle to see out of the front windscreen. If a vehicle collides with a pedestrian with sufficient force that the pedestrian strikes the windscreen of the vehicle, the vehicle is likely to be travelling at a considerable speed. If a pedestrian air-bag inflates while the vehicle is travelling at speed, and subsequently obscures the driver's view for a long period of time, the result may be that the driver fails to avoid one or more further objects or hazards before bringing the vehicle to a complete stop.

One solution to this problem is presented in JP 2006219046. This document discloses a pedestrian air-bag which has a pair of straps, which are attached to upper left and right corners of the air-bag. As the air-bag inflates the straps are drawn from a spring-biased reel, with the biasing being overcome by the inflation of the air-bag cushion itself. Once the air-bag has been inflated, however, the reel rotates to retract the straps, thereby drawing the deflating air-bag off the windscreen and allowing the driver to see clearly out of the windscreen once more.

It is an object of the present invention to provide an improved system of this type.

Accordingly, one aspect of the present invention provides a retraction device according to the features of claim 1.

Conveniently, the flexible elongate member crosses the hollow interior of the hollow elongate element at two separate locations, and when the piston is driven along the travel path lengths of the flexible element at each location are wrapped around the piston.

Advantageously, the piston comprises respective first and second drive tips, with a length of the flexible member at the first location being wrapped around a first drive tip, and a length of the flexible element at the second location being wrapped around a secondary drive tip when the piston is driven along the travel path.

Preferably, the movement of the piston along the travel path opens additional venting of the air-bag.

Conveniently, a part of the air-bag extends into the hollow interior of the elongate element, and is cut or broken by the piston as it is driven along the travel path.

Advantageously, a movable element projects into the hollow interior of the elongate element, the movable element being moved through interaction with the piston when the piston is driven along the travel path.

A further aspect of the invention provides a vehicle incorporating an air-bag and retraction device according to the above.

In order that the present invention may be more readily understood embodiments thereof will now be described, by way of example, with reference to the accompanying drawings in which:
Figures 1 to 4 show a retraction arrangement embodying the present invention prior to activation;
Figure 5 shows a vehicle incorporating a retraction device embodying the present invention, before activation of the device;
Figures 6 to 8 show the device of figure 1 during activation;
Figures 9 and 10 show an alternative retraction device embodying the present invention before, and during, activation respectively; and
Figures 11 and 12 show respective further retraction devices embodying the present invention.

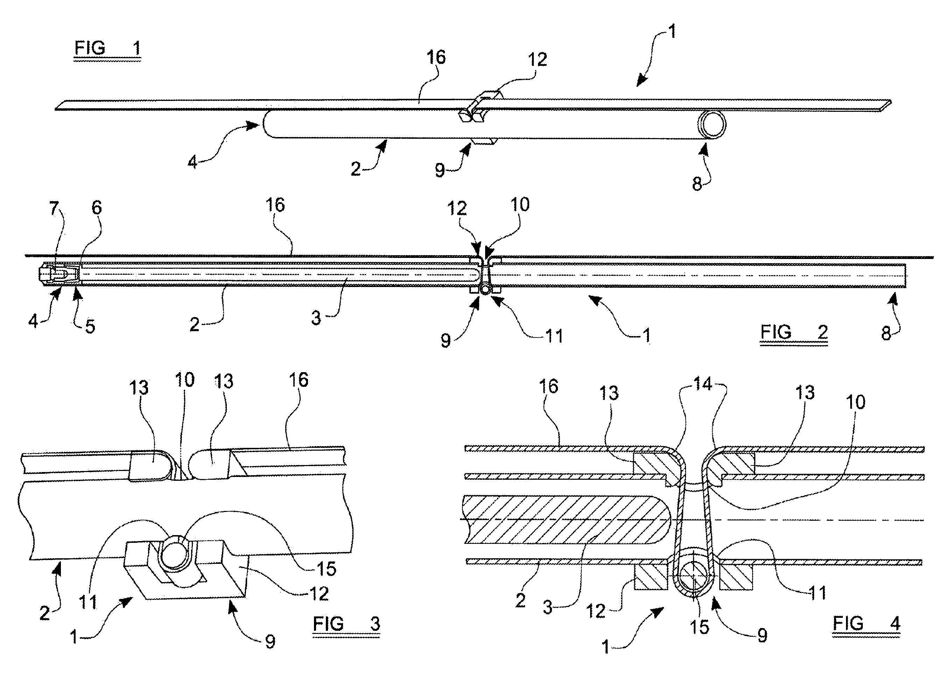

A retraction arrangement 1 embodying the present invention is shown in figure 1, and a cut-away view of the retraction arrangement 1 is also shown in figure 2.

Figures 3 and 4 show external and cut-away views of a central region of the retraction arrangement 1, respectively.

The retraction arrangement 1 comprises an elongate hollow element 2 which, in the depicted embodiment, is generally cylindrical in shape.

A piston 3 is slidably housed within the elongate member 2, and is initially positioned at or near a first end 4 of the elongate member 2. The piston 3 is, in the depicted embodiment, approximately half the length of the elongate member 2.

At a proximal end 5 thereof, the piston 3 has a flange 6 which extends outwardly and substantially fills the cross-sectional area of the elongate member 2. In preferred embodiments the flange 6 creates a substantially gas-tight seal.

A gas drive arrangement, in the form of a generator 7, is also provided at the first end 4 of the elongate member 2. The gas generator 7 may be a micro gas generator (MGG). The gas generator 7 and piston 3 are arranged so that, when gas is generated by the gas generator 7, the build up of pressure on one side of the flange 6 drives the piston 3 towards the second end 8 of the elongate member. The gas generator 7 may be activated in response to a triggering signal, as will be discussed in more detail below.

At or near a middle region 9 of the elongate member 2, a pair of apertures 10, 11 are provided, which are substantially diametrically opposite one another across the width of the elongate member 2.

A guide member 12 is attached to the exterior surface of the elongate member 2 in the region of the apertures 10,11. In preferred embodiments the guide member 12 is approximately C-shaped when seen side-on, and fits around the elongate member 2 in a close fit. The guide member 12 includes a pair of first guide elements 13, which are positioned on either side of the first aperture 10, and include respective rounded guide surfaces 14 immediately beside the first aperture 10.

The guide member 12 also presents a second guide element 15, which is generally cylindrical in shape and which projects immediately outside the second aperture 11, substantially at right angles to the longitudinal axis of the elongate member 2.

An elongate flexible member in the form of a flexible strap 16 passes over the guide surface 14 of one of the guide elements 13, across the hollow interior of the elongate member 2, around the outer circumference of the second guide element 15, back across the hollow interior of the elongate member 2, and finally over the guide surface 14 of the upper one of the first guide elements 13. This can be seen most clearly in figures 3 and 4. The first aperture 10 is the entry point for the flexible strap 16.

It will be understood that when the strap 16 passes twice across the hollow interior of the elongate member 2, the strap 16 presents a barrier to the piston 3. In an initial configuration, as shown in figures 1 to 4, the piston 3 lies wholly on one side of the barrier formed by the strap 16 passing through the hollow interior of the elongate member 2.

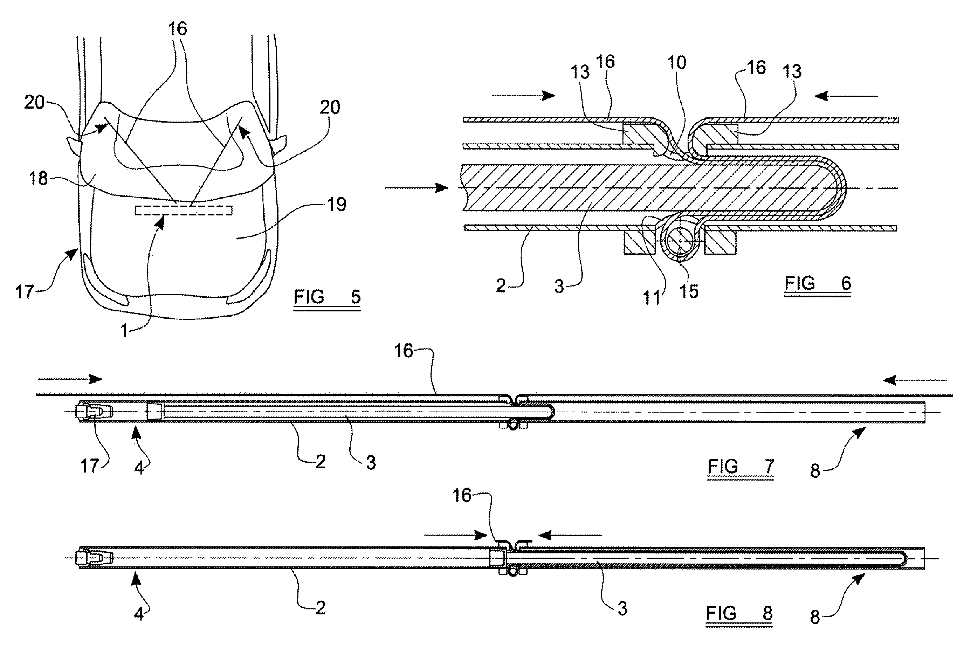

Turning to figure 5, a vehicle 17 is shown, in which a pedestrian air-bag 18 has been inflated to cover the windscreen and A-pillars (not visible in figure 5) of the vehicle 17.

A retraction arrangement 1 as described above (shown in phantom in figure 5) is mounted below a rear edge of the bonnet 19 of the vehicle 17, and the strap 16 is arranged so that its two free ends 20 are attached to respective upper corners of the air-bag 18.

Use of the retraction arrangement 1 to retract the air-bag 18 will now be described.

When retraction of the air-bag is desired, a triggering signal is sent to the gas generator 17, which generates highly pressurised gas in the region of the elongate member 2 between the generator 17 and the piston 3. The effect of this is to drive the piston 3 from the first end 4 of the elongate member 2 towards the second end 8 thereof.

As the piston 3 begins to move, it is driven towards the two lengths of the strap 16 that pass across the hollow interior of the elongate member 2. The piston 3 will be driven into the lengths of the strap 16 and will keep moving. The effects of this will be, as shown in figures 6 and 7, for the two lengths of the strap 16 that extend from the first aperture 10 to be drawn into the hollow interior of the elongate member 2, and wrapped around the forward end of the piston 3.

As will be appreciated from figure 6, for each unit of length by which the forward end of the piston 3 moves past the entry point at which the strap 16 enters the elongate member 2 (i.e. the first aperture 10), approximately two units of length of the strap 16 are drawn into the elongate member 2. This is because the length of strap 16 within the elongate member 2 extends from the second guide element 15 through the second aperture 11 and along the length of the piston 3 to the end thereof, and then back to the first aperture 10, again along the length of the piston 3. The arrangement 1 may therefore be said to have a 2:1 mechanical advantage or 1:2 transmission.

The piston 3 may continue until it has reached, or substantially reached, the second end 8 of the elongate member 2, as shown in figure 8. At this point, the arrangement 1 will have drawn a length of strap 16 into the elongate member 2 that is approximately equal to twice the total length of the piston 3 (or approximately equal to the total length of the elongate member 2).

It will be appreciated that, as the two lengths of strap 16 are drawn into the elongate member 2, the air-bag 18 will be retracted and drawn away from the windscreen of the vehicle 17, thus assisting the driver of the vehicle in seeing clearly out of the windscreen.

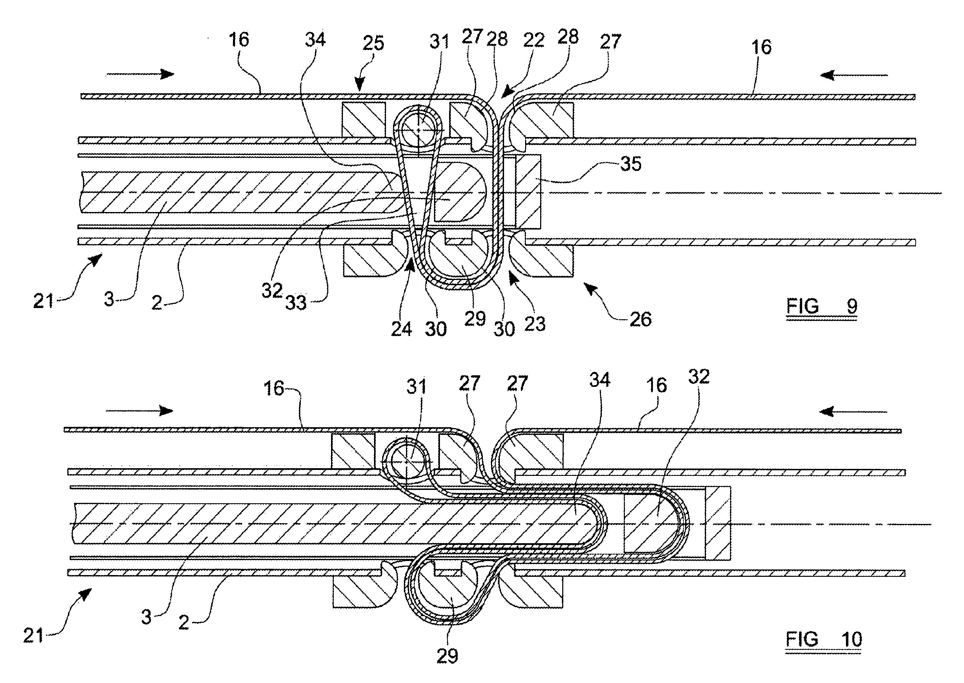

Referring to figures 9 and 10 a cut-away view of an alternative retraction arrangement 21 embodying the present invention is shown.

In this embodiment the elongate element 2 has first and second apertures 22,23 formed therein so as to be opposite one another across the width of the elongate element 2. In addition, a third aperture 24 is formed beside the second aperture 23, closer to the first end of the elongate element 2, and a fourth aperture 25 is formed beside the first aperture 22, and opposite the third aperture 24.

An alternative guide arrangement 26 is attached to the elongate element 2 in the region of the first of four holes 22,23,24,25.

A pair of first and second guide elements 27 are provided on either side of the first aperture 22, having rounded guide surfaces 28. Between the second and third apertures 23,24 a second guide element 29 is positioned, having rounded guide surfaces 30 adjacent each of the second and third apertures 23,24.

Finally, a generally cylindrical third guide element 31 is supported just outside the fourth aperture 25, arranged to be generally parallel to the longitudinal axis of the elongate element 2.

The strap 16 is arranged so that the strap 16 passes over one of the first guide elements 27 and through the first aperture 22, across the hollow interior of the elongate member 22 and out of the second aperture 23, over the second guide element 29 and into the third aperture 24, across the hollow interior of the elongate element 2, around the third guide element 31, and then back through the third aperture 24, over the second guide element 29, into the second aperture 23 and out of the first aperture 22, passing over the other one of the first guide elements 27.

In this embodiment the piston 3 has a main driving tip 32 which, in an initial position, lies between the stretches of strap that pass between the first and second apertures and the stretches of strap 16 that pass between the third and fourth apertures 24,25. A through aperture 33 is defined behind the main driving tip 32, and the lengths of strap 16 that pass between the third and fourth apertures 24,25 pass through the through aperture 33.

The piston 3 also includes a secondary driving tip 34, which is located beside the lengths of strap 16 that pass between the third and fourth apertures 24,25. It will be appreciated that the through hole 33 is formed between the primary driving tip 32 and the secondary driving tip 34.

In embodiments of the invention the primary and second driving tips 32,34 may be enclosed within an outer housing 35, that slides within the elongate member 2.

As with the previous embodiment, to activate the retraction arrangement the piston 3 is driven along the length of the elongate element 2, as shown in figure 10. It will be understood that, for each unit of length by which the piston 3 extends beyond the entry point of the strap 16 into the elongate element 2 (i.e. the first aperture 22), approximately four units of length of strap 16 will be drawn into the elongate element 2. One loop of strap 16 will pass between the first and second apertures 22,23 and over the primary driving tip 32, whilst a second loop of strap 16 will pass between the third and fourth apertures 24,25 and over the secondary driving tip 34. It may therefore be said that the second retraction arrangement 21 has a 4:1 mechanical advantage or 1:4 transmission. It will be understood that, with this embodiment, the strap 16 may be drawn into the elongate element 2 very rapidly, thus assisting in swift removal of an air-bag from the windscreen of a vehicle.

In embodiments of the invention the arrangement is such that, when retraction of the air-bag is to occur, additional venting for the air-bag is opened, allowing the air-bag to collapse easily. This may be achieved, for example, by having one or more additional vents that are opened in response to a triggering signal, which is sent at around the same time as, or shortly before or after, the signal to trigger the retraction arrangement.

In further embodiments, the activation of the retraction arrangement may lead to the opening of additional venting of the air-bag.

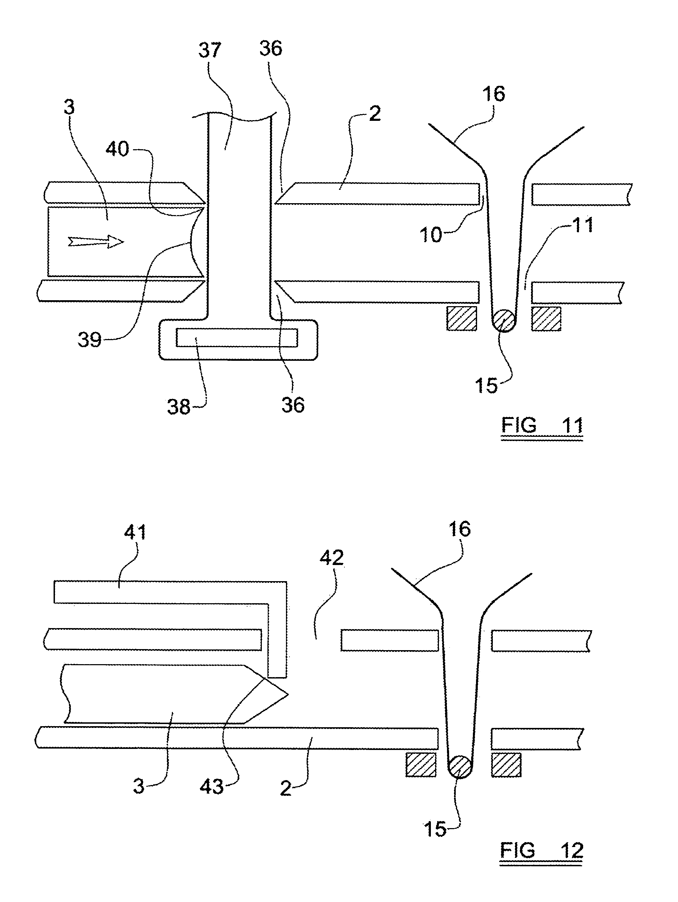

For instance, referring to figure 11, an elongate element 2 is shown which has a pair of additional apertures 36 formed therethrough, substantially diametrically opposite one another across the width of the elongate element 2. In the depicted embodiment the further apertures 36 are provided closer to the first end of the elongate element 2 than the first and second apertures 10,11, through which the strap 16 passes.

A trunk region 37 of the air-bag passes through the second apertures 36, across the hollow interior of the elongate element 2, and is attached to a locking member 38, which is too wide to be pulled through the further apertures 36.

A leading edge 39 of the piston 3 is relatively sharp, and preferably has one or more cutting edges 40.

When the retraction arrangement of this embodiment is activated, the piston 3 is driven towards the trunk region 37, and cuts through the trunk region 37, thus allowing pressurised gas to escape from the interior of the air-bag through the severed end. The piston 3 continues on to engage the strap 16, and draws the strap 16 into the elongate element 2 in the manner described above.

A further embodiment is shown in figure 12. In this embodiment, an actuating arm 41 protrudes into the hollow interior of the elongate element 2 through an entry aperture 42 formed therein. The piston 3 has a tapered or chamfered leading edge 43 which is positioned to contact the actuating arm 41 when the piston 3 is driven along the length of elongate element 2. As the tapered edge 43 of the piston 3 contacts the actuating arm 41, the actuating arm 41 is pushed out of the elongate element 2, and this motion opens further ventilation of the air-bag, for instance through being attached to an openable panel in the air-bag surface.

Once the piston 3 has moved the actuating arm 41, the piston 3 engages the strap 16, drawing the strap into the elongate element 2, as described above.

It will be appreciated that embodiments of the present invention provide a versatile and robust arrangement for retracting a passenger air-bag from the windscreen of a vehicle following deployment.

It should be appreciated, however, that embodiments of the present invention may be used in conjunction with other types of inflatable air-bag, for instance internal air-bags, or air-bags to move parts of a vehicle, for instance air-bags involved in bonnet lifters or the like.

When used in this specification and claims, the terms "comprises" and "comprising" and variations thereof mean that the specified features, steps or integers are included. The terms are not to be interpreted to exclude the presence of other features, steps or components.

## Claims

1. A retraction device (1, 21) comprising:
an inflatable air-bag (18);
a hollow elongate element (2), defining a travel path therealong;
a piston (3) received within the elongate element (2) and adapted to be driven along the travel path by a drive arrangement (7); and
an elongate flexible member (16) having a first portion which is attached to a part of the air-bag (18), and a second portion which is fixed or held in place with respect to the elongate element (2) or the piston (3), a part of the flexible member (16) being disposed within the elongate element (2) and entering the elongate element (2) at an entry point (10) wherein the flexible member (16) extends across the hollow interior of the elongate element (2), thus presenting a barrier to the piston (3) passing along the hollow interior;
wherein, when the piston (3) is driven along the travel path by the drive arrangement (7), a length of the flexible member (16) is wrapped around a driving tip (32, 34) of the piston (3), and a length of the flexible member (16) is drawn into the elongate element (2), thus drawing the first portion of the flexible member (16) towards the entry point.

2. A retraction device (1, 21) according to claim 1, wherein the flexible member (16) extends across the hollow interior of the elongate element (2) between a pair of apertures (10, 11; 22, 23; 24, 25) which are substantially diametrically opposite one another across the width of the elongate element (2).

3. A retraction device (21) according to claim 1 or 2 wherein the flexible member (16) crosses the hollow interior of the hollow elongate element (2) at two separate locations, and when the piston (3) is driven along the travel path lengths of the flexible member (16) at each location are wrapped around the piston (3).

4. A retraction device (21) according to claim 3, wherein the piston (3) comprises respective first and second drive tips (32, 34), with a length of the flexible member (16) at the first location being wrapped around a first drive tip (32), and a length of the flexible member (16) at the second location being wrapped around a secondary drive tip (34) when the piston (3) is driven along the travel path.

5. A retraction device (1, 21) according to any preceding claim wherein the movement of the piston (3) along the travel path opens additional venting of the air-bag (18).

6. A retraction device (1, 21) according to claim 5 wherein a part (37) of the air-bag (18) extends into the hollow interior of the elongate element (2), and is cut or broken by the piston (3) as it is driven along the travel path.

7. A retraction device (1, 21) according to claim 5 or 6 wherein a movable element (41) projects into the hollow interior of the elongate element (3), the movable element (41) being moved through interaction with the piston (3) when the piston (3) is driven along the travel path.

8. A vehicle incorporating a retraction device (1, 21) according to any preceding claim.

## Patentansprüche

1. Rückzugvorrichtung (1, 21), umfassend:
einen aufblasbaren Airbag (18);
ein hohles längliches Element (2), das dort entlang einen Weg definiert;
einen Kolben (3), der in dem länglichen Element (2) aufgenommen und so ausgelegt ist, dass er entlang dem Weg von einer Antriebsanordnung (7) angetrieben wird; und
ein längliches flexibles Element (16), das einen ersten Abschnitt aufweist, der an einem Teil eines Airbags (18) angebracht ist, und einen zweiten Abschnitt, der bezogen auf das längliche Element (2) oder den Kolben (3) befestigt oder festgehalten ist, wobei ein Teil des flexiblen Elements (16) innerhalb des länglichen Elements (2) angeordnet ist und an einem Eintrittspunkt (10) in das längliche Element (2) gelangt, wobei das flexible Element (16) quer durch den hohlen Innenraum des länglichen Elements (2) verläuft und so ein Hindernis für den Kolben (3) darstellt, der sich entlang dem hohlen Innenraum bewegt;
wobei, wenn der Kolben (3) von der Antriebsanordnung (7) entlang dem Weg angetrieben wird, ein Stück des flexiblen Elements (16) um eine Antriebsspitze (32, 34) des Kolbens (3) gelegt wird, und ein Stück des flexiblen Elements (16) in das längliche Element (2) gezogen wird, sodass der erste Abschnitt des flexiblen Elements (16) in Richtung des Eintrittspunkts gezogen wird.

2. Rückzugvorrichtung (1, 21) nach Anspruch 1, wobei das flexible Element (16) quer durch den hohlen Innenraum des länglichen Elements (2) zwischen einem Paar Öffnungen (10, 11; 22, 23; 24, 25) verläuft, die über die Breite des länglichen Elements (2) einander im Wesentlichen genau gegenüberliegen.

3. Rückzugvorrichtung (21) nach Anspruch 1 oder 2, wobei das flexible Element (16) den hohlen Innenraum des hohlen länglichen Elements (2) an zwei getrennten Stellen durchquert, und wenn der Kolben (3) entlang dem Weg angetrieben wird, werden Stücke des flexiblen Elements (16) an jeder Stelle um den Kolben (3) gelegt.

4. Rückzugvorrichtung (21) nach Anspruch 3, wobei der Kolben (3) eine erste beziehungsweise zweite Antriebsspitze (32, 34) umfasst, wobei ein Stück des flexiblen Elements (16) an der ersten Stelle um eine erste Antriebsspitze (32) gelegt ist, und ein Stück des flexiblen Elements (16) an der zweiten Stelle um eine zweite Antriebsspitze (34) gelegt ist, wenn der Kolben (3) entlang dem Weg angetrieben wird.

5. Rückzugvorrichtung (1, 21) nach einem vorhergehenden Anspruch, wobei die Bewegung des Kolbens (3) entlang dem Weg einen zusätzlichen Auslass des Airbags (18) öffnet.

6. Rückzugvorrichtung (1, 21) nach Anspruch 5, wobei sich ein Teil (37) des Airbags (18) in den hohlen Innenraum des länglichen Elements (2) erstreckt und von dem Kolben (3) zerschnitten oder zerrissen wird, wenn er entlang dem Weg angetrieben wird.

7. Rückzugvorrichtung (1, 21) nach Anspruch 5 oder 6, wobei ein bewegliches Element (41) in den hohlen Innenraum des länglichen Elements (3) ragt, wobei das bewegliche Element (41) durch die Wechselwirkung mit dem Kolben (3) bewegt wird, wenn der Kolben (3) entlang dem Weg angetrieben wird.

8. Fahrzeug, das eine Rückzugvorrichtung (1, 21) nach einem vorhergehenden Anspruch beinhaltet.

## Revendications

1. Dispositif de rétraction (1, 21), comprenant :
un airbag gonflable (18) ;
un élément allongé creux (2), définissant un trajet de déplacement le long de celui-ci ;
un piston (3) reçu à l'intérieur de l'élément allongé (2) et adapté pour être entraîné le long du trajet de déplacement par un agencement d'entraînement (7) ; et
un organe flexible allongé (16) présentant une première partie qui est reliée à une partie de l'airbag (18), et une seconde partie qui est fixée ou maintenue en place par rapport à l'élément allongé (2) ou au piston (3), une partie de l'organe flexible (16) étant disposée à l'intérieur de l'élément allongé (2) et entrant dans l'élément allongé (2) à un point d'entrée (10) dans lequel l'organe flexible (16) s'étend à travers l'intérieur creux de l'élément allongé (2), présentant ainsi une barrière au piston (3) passant le long de l'intérieur creux ;
dans lequel, quand le piston (3) est entraîné le long du trajet de déplacement par l'agencement d'entraînement (7), une longueur de l'organe flexible (16) est enveloppée autour d'un bout d'entraînement (32, 34) du piston (3), et une longueur de l'organe flexible (16) est tirée dans l'élément allongé (2), tirant ainsi la première partie de l'organe flexible (16) vers le point d'entrée.

2. Dispositif de rétraction (1, 21) selon la revendication 1, dans lequel l'organe flexible (16) s'étend à travers l'intérieur creux de l'élément allongé (2) entre une paire d'ouvertures (10, 11 ; 22, 23 ; 24, 25) qui sont essentiellement diamétralement opposées l'une à l'autre à travers la largeur de l'élément allongé (2).

3. Dispositif de rétraction (21) selon la revendication 1 ou 2, dans lequel l'organe flexible (16) traverse l'intérieur creux de l'élément creux allongé (2) à deux emplacements séparés, et quand le piston (3) est entraîné le long du trajet de déplacement, des longueurs de l'organe flexible (16) à chaque emplacement sont enveloppées autour du piston (3).

4. Dispositif de rétraction (21) selon la revendication 3, dans lequel le piston (3) comprend des premier et second bouts d'entraînement respectifs (32, 34), une longueur de l'organe flexible (16) au premier emplacement étant enveloppée autour d'un premier bout d'entraînement (32), et une longueur de l'organe flexible (16) au second emplacement étant enveloppée autour d'un bout d'entraînement secondaire (34) quand le piston (3) est entraîné le long du trajet de déplacement.

5. Dispositif de rétraction (1, 21) selon une quelconque revendication précédente, dans lequel le mouvement du piston (3) le long du trajet de déplacement ouvre une évacuation de gaz supplémentaire de l'airbag (18).

6. Dispositif de rétraction (1, 21) selon la revendication 5, dans lequel une partie (37) de l'airbag (18) s'étend dans l'intérieur creux de l'élément allongé (2), et est coupée ou rompue par le piston (3) lorsqu'il est entraîné le long du trajet de déplacement.

7. Dispositif de rétraction (1, 21) selon la revendication 5 ou 6, dans lequel un élément mobile (41) dépasse dans l'intérieur creux de l'élément allongé (3), l'élément mobile (41) étant déplacé par interaction avec le piston (3) quand le piston (3) est entraîné le long du trajet de déplacement.

8. Véhicule intégrant un dispositif de rétraction (1, 21) selon une quelconque revendication précédente.
